Europäisches Patentamt
European Patent Office
Office européen des brevets

(19) (11) Veröffentlichungsnummer: **0 013 899**
**A2**

(12) # EUROPÄISCHE PATENTANMELDUNG

(21) Anmeldenummer: **80100085.2**

(22) Anmeldetag: **09.01.80**

(51) Int. Cl.³: **C 09 B 23/14**, C 09 B 23/06, D 21 H 3/80

(30) Priorität: **25.01.79 DE 2902763**

(43) Veröffentlichungstag der Anmeldung: **06.08.80 Patentblatt 80/16**

(84) Benannte Vertragsstaaten: **BE CH DE FR GB IT**

(71) Anmelder: **BASF Aktiengesellschaft, Carl-Bosch-Strasse 38, D-6700 Ludwigshafen (DE)**

(72) Erfinder: **Degen, Hans-Juergen, Dr., Schillerstrasse 6, D-6143 Lorsch (DE)**
Erfinder: **Grychtol, Klaus, Dr., Seebacher Strasse 96A, D-6702 Bad Duerkheim 1 (DE)**

(54) **Basische Farbstoffe und deren Verwendung zum Färben von Papierstoffen.**

(57) Basische Farbstoffe der allgemeinen Formel

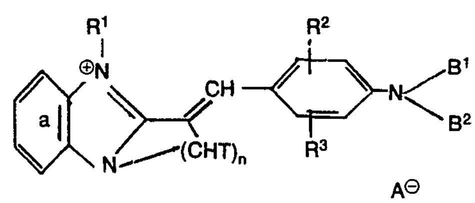

I

in der

$A^{\ominus}$ ein Anion

$R^1$ gegebenenfalls substituiertes Alkyl oder ein Rest der Formel

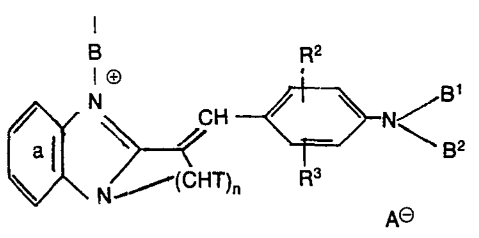

wobei B ein Brückenglied ist,

n 2, 3 oder 4,

T Wasserstoff oder $C_1$- bis $C_4$-Alkyl,

$R^2$ Wasserstoff, Methyl, Äthyl, Hydroxy, Methoxy oder Äthoxy,

$R^3$ Wasserstoff, Chlor, Methyl oder Äthyl,

$B^1$ Wasserstoff oder gegebenenfalls substituiertes Alkyl,

$B^2$ ein Rest der Formel

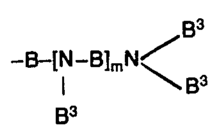 , 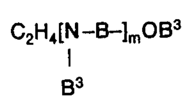 oder

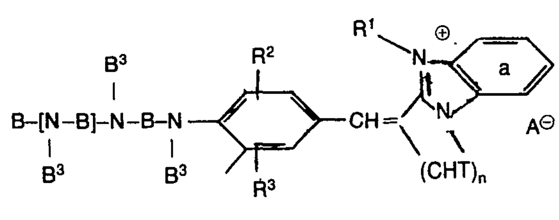

EP 0 013 899 A2

m 0, 1, 2 oder 3, die Reste

$B^3$ unabhängig voneinander Wasserstoff, $C_1$- bis $C_4$-Alkyl oder durch $-N-B^3$, Hydroxy oder $C_1$- bis $C_4$-Alkoxy
|
$B^3$

substituiertes $C_2$- oder $C_3$-Alkyl,

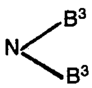 Pyrrolidino, Piperidino, Morpholino, Piperazino, N-Methylpiperazino, N-β-Hydroxyäthylpiperazino oder Hexamethylenimino sind und der Ring a noch substituiert sein und wobei, wenn die Verbindungen der Formel I im Rest $R^1$ einen Rest B oder $-N-B^3$ enthalten,
|
$B^3$

$B^2$ auch eine Gruppe $B^1$ oder

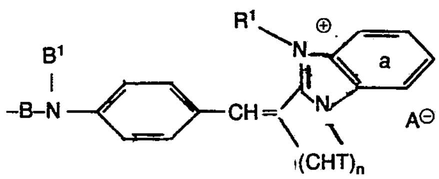

sein kann.

Die Farbstoffe eignen sich vorzüglich zum Färben von Papierstoffen.

BEZEICHNUNG GEÄNDERT
siehe Titelseite

Basische Farbstoffe

Die Erfindung betrifft Verbindungen der Formel I

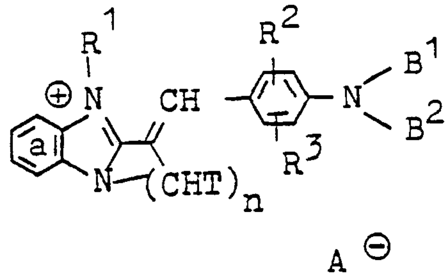

I

in der

$A^{\ominus}$ ein Anion

$R^1$ gegebenenfalls substituiertes Alkyl oder ein Rest der Formel

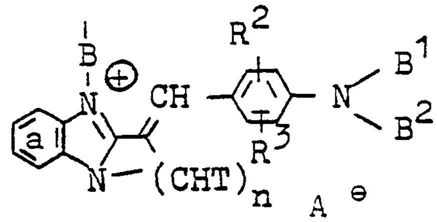

wobei B ein Brückenglied ist,

n 2, 3 oder 4,

T Wasserstoff oder $C_1$- bis $C_4$-Alkyl,

$R^2$ Wasserstoff, Methyl, Äthyl, Hydroxy, Methoxy oder Äthoxy,

$R^3$ Wasserstoff, Chlor, Methyl oder Äthyl,

$B^1$ Wasserstoff oder gegebenenfalls substituiertes Alkyl,

$B^2$ ein Rest der Formel

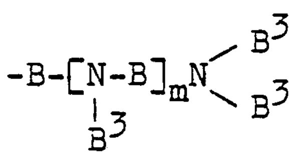 , 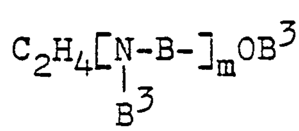 oder

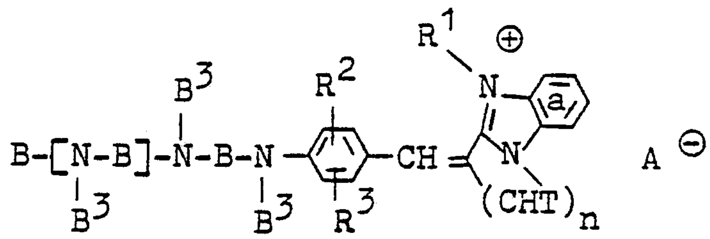 ,

m 0, 1, 2 oder 3, die Reste

$B^3$ unabhängig voneinander Wasserstoff, $C_1$- bis $C_4$-Alkyl oder durch $-\underset{B^3}{N}-B^3$, Hydroxy oder $C_1$- bis $C_4$-Alkoxy substituiertes $C_2$- oder $C_3$-Alkyl,

$N{<}^{B^3}_{B^3}$ Pyrrolidino, Piperidino, Morpholino, Piperazino, N-Methylpiperazino, N-ß-Hydroxyäthylpiperazino oder Hexamethylenimino sind und der Ring a noch substituiert sein und wobei, wenn die Verbindungen der Formel I im Rest $R^1$ einen Rest B oder $-\underset{B^3}{N}-B^3$ enthalten,

$B^2$ auch eine Gruppe $B^1$ oder

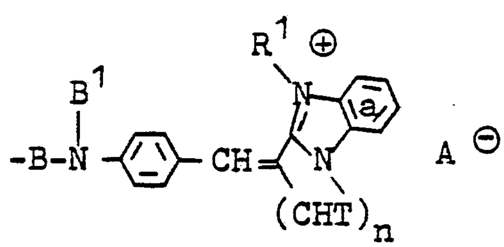

sein kann.

Brückenglieder B können gleich oder verschieden und symmetrisch oder unsymmetrisch sein und sind beispielsweise:

$-(CH_2)_{2-6}-$, 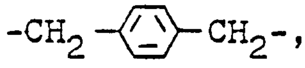, 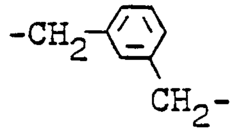, 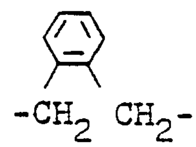,

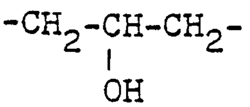, 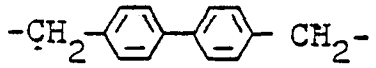, 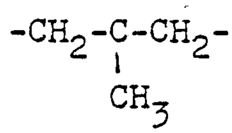,

$-CH_2-CH_2-O-CH_2-CH_2-$, $-CH_2-CH_2-S-CH_2-CH_2-$, 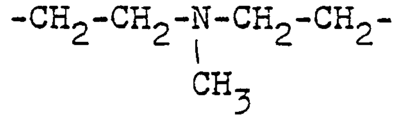,

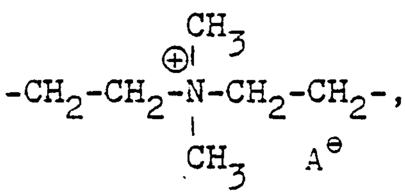, $-CH_2-CH=CH-CH_2-$, $-CH_2-C\equiv C-CH_2-$,

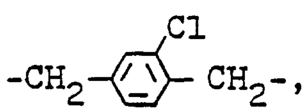, 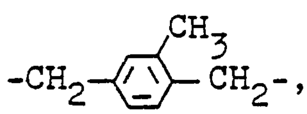, 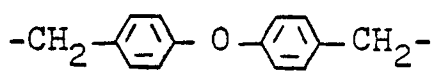,

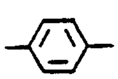, 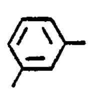, 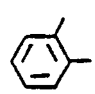, 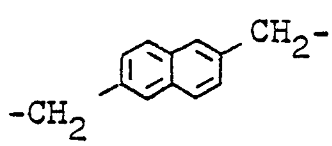,

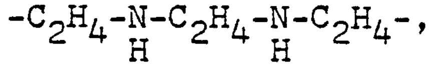, 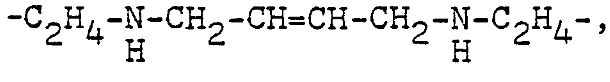,

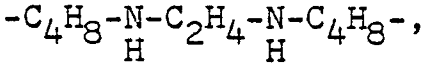, 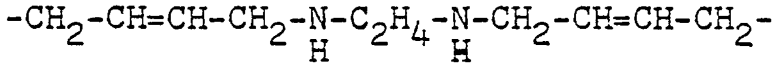,

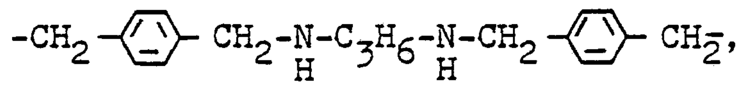

$-C_4H_8-\underset{CH_3}{\underset{|}{N}}-C_2H_4-\underset{H}{N}-C_4H_8-$, $-C_4H_8-\overset{CH_3}{\overset{\oplus|}{\underset{CH_3}{\underset{|}{N}}}}-C_2H_4-\underset{H}{N}-C_4H_8-$ oder
$A^{\ominus}$

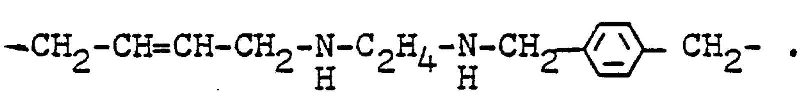

Als Anionen $A^{\ominus}$ sind z. B. Fluorid, Chlorid, Bromid, Jodid, Perchlorat, Hydrogensulfat, Sulfat, Aminosulfat, Nitrat, Dihydrogenphosphat, Hydrogenphosphat, Phosphat, Hydrogencarbonat, Carbonat, Methosulfat, Äthosulfat, Cyanat, Thiocyanat, Tetrachlorozinkat, Borat, Tetrafluoroborat, Acetat, Chloracetat, Cyanacetat, Hydroxyacetat, Aminoacetat, Methylaminoacetat, Di- und Trichloracetat, 2-Chlorpropionat, 2-Hydroxypropionat, Glycolat, Thioglycolat, Thioacetat, Phenoxyacetat, Trimethylacetat, Valerat, Palmitat, Acrylat, Oxalat, Malonat, Crotonat, Succinat, Zitronat, Methylenbisthioglycolat, Äthylenbisiminoacetat, Nitrilotriacetat, Fumarat, Maleat, Benzoat, Methylbenzoat, Chlorbenzoat, Dichlorbenzoat, Hydroxybenzoat, Aminobenzoat, Phthalat, Terephthalat, Indolylacetat, Chlorbenzolsulfonat, Benzolsulfonat, Toluolsulfonat, Biphenylsulfonat und Chlortoluolsulfonat zu nennen.

Die Anionen werden zweckmäßigerweise so gewählt, daß sie eine möglichst gute Wasserlöslichkeit ergeben. Bewährt haben sich in diesem Zusammenhang z. B. Acetat, Chlorid, Methosulfat, Formiat, Äthosulfat oder Aminosulfat.

Reste $R^1$ sind beispielsweise:

Methyl, Äthyl, Propyl, Butyl, Hexyl, Dodecyl, 2-Chloräthyl, 4-Chlorbutyl, 4-Chlorbuten-2-yl, 2-Hydroxy-3-chlorpropyl, 2-Cyanäthyl, 2-Hydroxyäthyl, Benzyl, o- m-p-Chlormethylbenzyl, 4-Methylbenzyl,

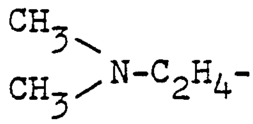, 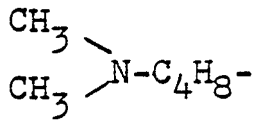, $H_2N-C_2H_4-\underset{H}{N}-C_2H_4-$,

$H_2N-C_2H_4-\underset{H}{N}-C_4H_8-$, 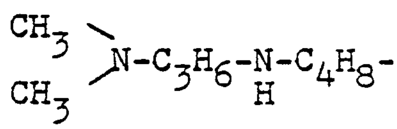,

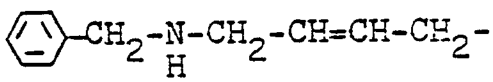,

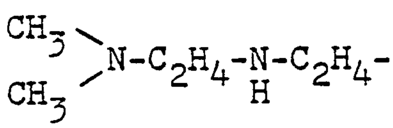, 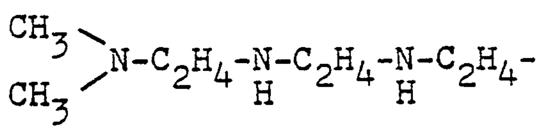,

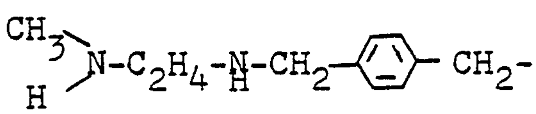 oder 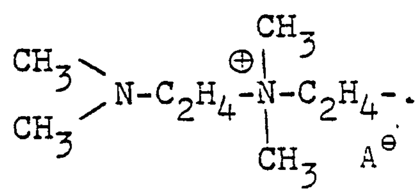.

Bevorzugte Reste $R^1$ sind z. B. Methyl, Äthyl, Benzyl,

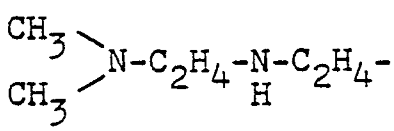, $H_2N-C_2H_4-\underset{H}{N}-C_2H_4-$, $H_2N-C_2H_4-\underset{H}{N}-C_4H_8-$,

$H_2N-C_2H_4-\underset{H}{N}-CH_2-CH=CH_2-CH_2-$ und 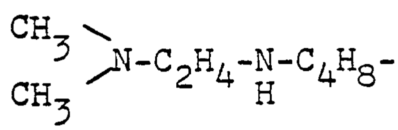.

T kann neben dem bevorzugten Wasserstoff z. B. Methyl, Äthyl n- oder i-Propyl oder -Butyl sein.

Als Reste $B^1$ sind z. B. $C_1$- bis $C_4$-Alkyl, das noch durch Hydroxy, Chlor, Cyan, $C_1$- bis $C_4$-Alkoxy, $C_1$- bis $C_4$-Alkylcarbonyloxy-, Amino-, $C_1$- bis $C_6$-Alkylamino, $C_1$- bis $C_6$-Dialkylamino, Aminoalkylamino oder Hydroxyalkylamino substituiert sein kann, zu nennen.

Weiterhin kommen z. B. Cyclohexyl, Benzyl, Phenyläthyl oder Alkyl in Betracht.

Reste $R^3$ sind neben Wasserstoff im einzelnen z. B.: Methyl, Äthyl, Propyl, Hexyl, Cyclohexyl, Aminoäthyl, Methylaminoäthyl, Dimethylaminoäthyl, Aminopropyl, Methylaminopropyl, Benzyl, Hydroxyäthyl, Hydroxypropyl, Methoxyäthyl oder Äthoxyäthyl.

Der Ring a kann beispielsweise noch ein- oder mehrfach durch Methyl, Äthyl, Chlor, Nitro oder Dimethylamino substituiert sein.

Zur Herstellung der Verbindungen der Formel I kann man beispielsweise Verbindungen der Formel Ia,

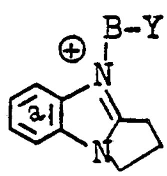

Ia,

$A^{\ominus}$

in der Y eine als Anion abspaltbare Gruppe, wie Chlor oder Methosulfat ist, mit einem Aldehyd der Formel II

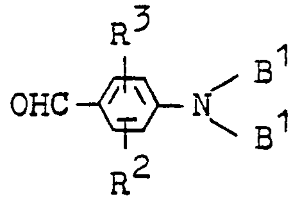 II

zu Verbindungen der Formel Ib kondensieren

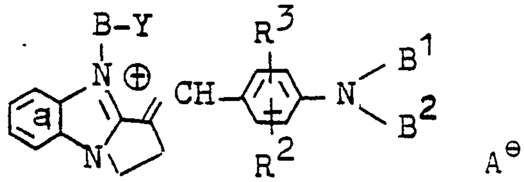 Ib

und diese anschließend mit Aminen der Formel

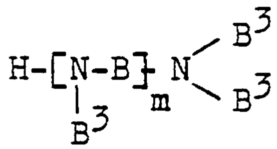 zu Verbindungen der Formel Ic

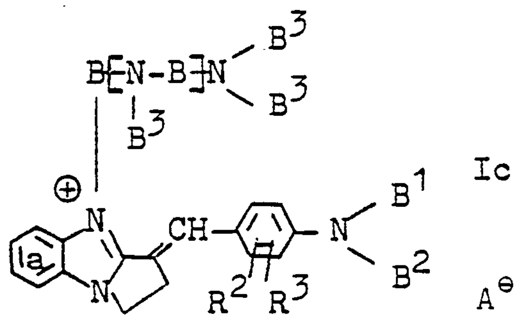 Ic

umsetzen.

Weiterhin kann man beispielsweise Verbindungen der Formel Id

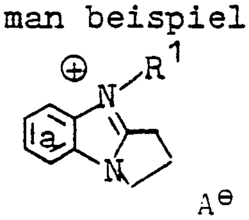 Id

in der $R^1$ gegebenenfalls substituiertes Alkyl bedeutet, aber keinen als Anion abspaltbaren Rest enthält, mit Verbindungen der Formel IIa

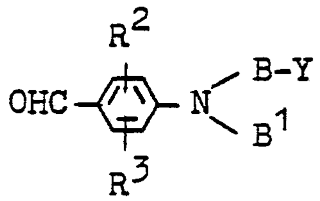 IIa

zu Verbindungen der Formel Ie kondensieren

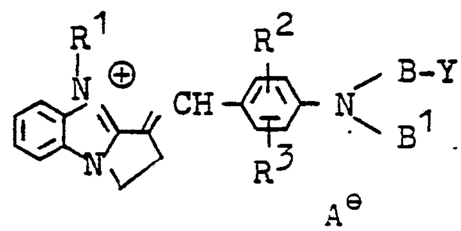 Ie,

Y hat dabei die angegebene Bedeutung.

Von Verbindungen der Formel Ie ausgehend gelangt man durch Umsetzung mit einem Moläquivalent eines Amins oder Polyamins der Formel

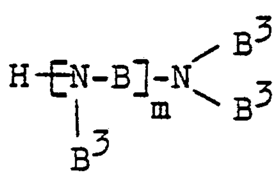

zu Verbindungen der Formel If

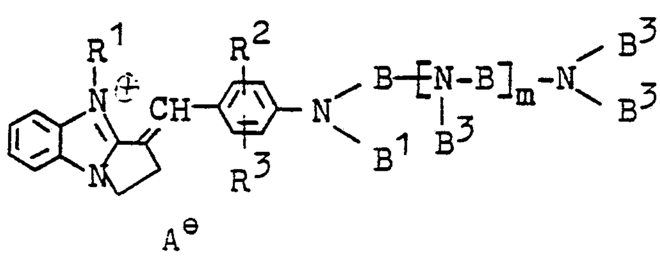 If

Weiterhin kann man durch Umsetzung von Verbindungen der Formel Ie mit 1/2 Moläquivalent eines Di- oder Polyamins zu Verbindungen der Formel Ig

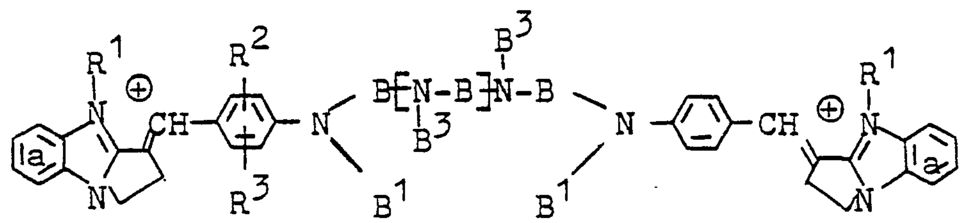

2 $A^{\ominus}$

Ig

gelangen.

In analoger Weise kann man durch Umsetzung von Verbindungen der Formel Ib, in denen $B^2$ die Bedeutung $B^1$ hat, mit 1/2 Moläquivalent eines Amins der Formel

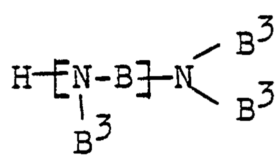

Verbindungen der Formel Ih

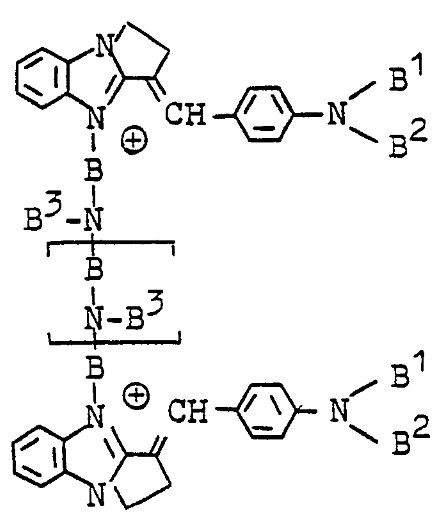

Ih

2 $A^{\ominus}$

erhalten.

Durch Umsetzung von Verbindungen der Formel

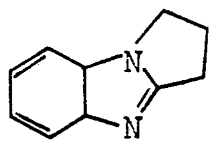

mit Alkylierungsmitteln der Formel

Y-B-Y

und anschließende Kondensation mit den Aldehyden der Formel II gelangt man zu Verbindungen der Formel Ii

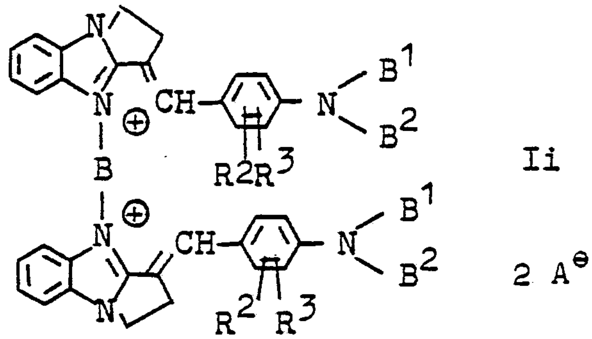

Ii

Die Synthese der Farbstoffe der Formel I kann mit oder ohne Lösungsmittel erfolgen, zweckmäßigerweise wird man, um zu problemlosen Flüssigeinstellungen zu gelangen, ein wassermischbares organisches Lösungsmittel wählen, z. B. Glykol, Diglykol, Glyzerin, Dimethylformamid, Dimethylsulfoxid, Thiodiglykol, Isopropanol oder Äthanol.

Als Kondensationsmittel sind in erster Linie Basen zu nennen wie Alkali, primäre, sekundäre und tertiäre Amine, vorzugsweise Piperidin, Pyrrolidin, Äthylendiamin, N,N-Dimethyläthylendiamin oder 1,3-Propylendiamin. Es versteht sich, daß man aus den in den Beispielen 1 - 63 beschriebenen Farbstofflösungen durch Zugabe von Salzlösungen, wie

Kochsalz- oder Zinkchloridlösung, auch Farbstoffpulver isolieren kann.

Von besonderer Bedeutung sind Verbindungen der Formel I, wobei

n die Zahl 2

$R^1$ Methyl oder ein Rest der Struktur

$-C_2H_4-Z$, $-C_4H_8-Z$, $-CH_2-CH=CH-CH_2-Z$,

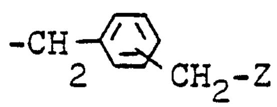 , $-CH_2-CH=CH-CH_2-\underset{H}{N}-C_2H_4-\underset{H}{N}-CH_2-CH=CH-CH_2-Z$,

$-C_2H_4-\underset{H}{N}-C_2H_4-\underset{H}{N}-C_2H_4-Z$ oder $-C_4H_8-\underset{H}{N}-C_2H_4-\underset{H}{N}-C_4H_8-Z$ ,

T, $R^1$ und $R^3$ Wasserstoff ,

$B^1$ $C_1$- bis $C_4$-Alkyl, Chloräthyl, Dimethylaminoäthyl oder Benzyl,

$B^3$ Wasserstoff, Methyl, Chloräthyl oder Dimethylaminoäthyl ,

Z ein Rest der Formel

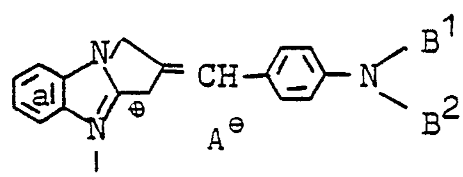

sind, $A^{\ominus}$ und $B^2$ die angegebene Bedeutung haben und der Ring a durch Methyl substituiert sein kann.

Bevorzugt für $B^2$ sind z. B.:

Methyl, Äthyl, Chloräthyl, Dimethylaminoäthyl,

$-C_2H_4-\underset{H}{N}-C_2H_4-NH_2$, $-C_2H_4-\underset{H}{N}-C_3H_6-NH_2$, $-C_2H_4-\underset{H}{N}-C_2H_4-\underset{CH_3}{N}-CH_3$

sowie Reste der Formel

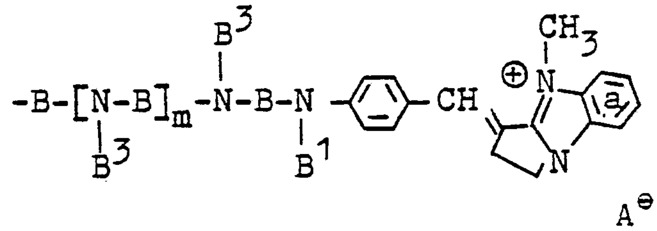,

in der

B $-C_2H_4-$

$B^3$ Wasserstoff

m die Zahl 1 und

$B^1$ Methyl oder Äthyl sind.

Die Verbindungen der Formel I sind gelb und eignen sich zum Färben anionischer Produkte, sowie insbesondere von Papier. Einzelne Papiersorten sind beispielsweise: gebleichter Sulfitzellstoff, gebleichter Sulfatzellstoff, Holzschliff, Sulfitzellstoff, Sulfatzellstoff sowie Mischungen dieser Papierrohstoffe.

Die Verbindungen der Formel I ändern bei Zusatz von Füllstoffen, z. B. China-Clay zur Papiermasse ihren Farbton praktisch nicht und sind daher sowohl für clay-haltige wie auch clay-freie Papiere hervorragend geeignet. Die Substantivität der erfindungsgemäßen Verbindungen ist sehr hoch, so daß sie sich auch zum Färben von Papieren aus reinem Zellstoff eignen.

In den folgenden Beispielen beziehen sich Angaben über Teile und Prozente, sofern nicht anders vermerkt, auf das Gewicht.

Beispiel 1

17,2 g eines Gemisches aus 15 g p-Xylylendichlorid und 5- und 6-Methylpyrrolidino-[1,2-a]-benzimidazol wird in 50 ml Äthylenglykol 1 Stunde auf 90°C erhitzt und dann mit 6 g Äthylendiamin versetzt. Nach einer weiteren Stunde werden 15 g p-Dimethylaminobenzaldehyd und 3 g Pyrrolidin bei einer Temperatur von 70°C zugegeben und die Temperatur wird noch 2 Stunden gehalten. Durch Zugabe von 50 ml Eisessig erhält man die Flüssigeinstellung eines gelben Farbstoffs der Struktur

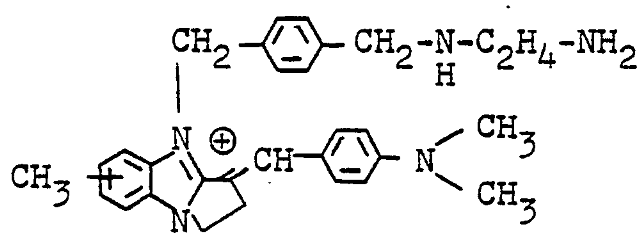

$Cl^{\ominus}$ ,

der Holzschliff, Mischungen aus Holzschliff und gebleichtem Sulfitzellstoff sowie reine Zellstoffe in grüngelben Tönen färbt und praktisch vollständig auszieht.

In analoger Weise erhält man durch Umsetzung von 1/2 Mol eines bifunktionellen Alkylierungsmittels $Y-P^1-Y$, wobei Y Chlor oder Brom ist, mit Pyrrolidino- oder Piperidino-[1,2-a]-benzimidazolen, anschließender Umsetzung mit Aminen bzw. Polyaminen $HP^2$ und nachfolgende Kondensation mit p-Aminobenzaldehyden der Formel

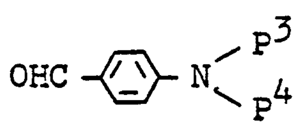

Farbstoffe der allgemeinen Struktur

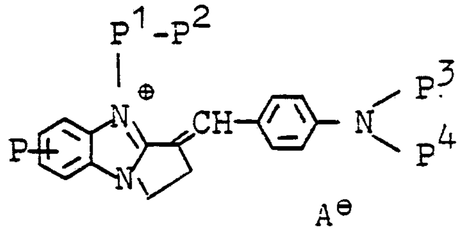

In der folgenden Tabelle 1 sind Beispiele für Farbstoffe dieses Typs aufgeführt die analog Beispiel 1 synthetisiert wurden:

Tabelle 1

| Bsp. | P | $P^1$ | $P^2$ | $P^3$ | $P^4$ |
|---|---|---|---|---|---|
| 2 | H | $C_2H_4$ | $-HN-C_2H_4-NH_2$ | $C_2H_5$ | $C_2H_5$ |
| 3 | H | " | $-HN-C_3H_6-NH_2$ | $CH_3$ | $CH_3$ |
| 4 | H | $C_4H_8$ | " | " | " |
| 5 | H | $CH_2-CH=CH-CH_2$ | " | " | " |
| 6 | H | $-CH_2-$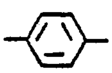$CH_2-$ | " | " | " |
| 7 | $CH_3$ | " | " | " | " |
| 8 | $CH_3$ | $C_4H_8$ | 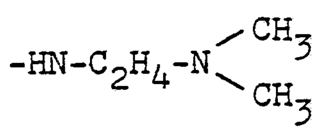 | $C_2H_5$ | $C_2H_5$ |
| 9 | $CH_3$ | " | " | $C_2H_4Cl$ | " |
| 10 | $CH_3$ | " | $-HN-C_6H_{12}-NH_2$ | " | " |
| 11 | $CH_3$ | " | $-HN-C_2H_4-\underset{H}{N}-C_2H_4-NH_2$ | " | " |
| 12 | $CH_3$ | " | $-HN-C_3H_6-\underset{H}{N}-C_3H_6-NH_2$ | $CH_3$ | $CH_3$ |
| 13 | $CH_3$ | " | " | $CH_2-C_6H_5$ | $CH_3$ |
| 14 | $CH_3$ | " | $-HN-C_2H_4OH$ | $CH_3$ | $CH_3$ |
| 15 | H | " | $-HN-C_2H_4-O-C_2H_4-NH_2$ | " | " |

| Bsp. | P | $P^1$ | $P^2$ | $P^3$ | $P^4$ |
|---|---|---|---|---|---|
| 16 | H | $C_4H_8$ | 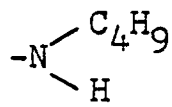 | $CH_3$ | $CH_3$ |
| 17 | H | $C_2H_4$ | 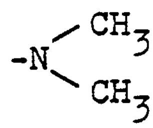 | " | " |
| 18 | $CH_3$ | " | " | " | " |
| 19 | H | " | 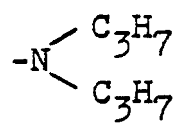 | 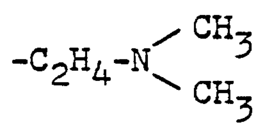 | " |

Beispiel 20

16 g Pyrrolidino-[1,2-a]-benzimidazol werden in 25 ml Thiodiglykol gelöst, mit 6,3 g 1,4-Dichlorbutan versetzt und 2 Stunden auf 130 °C erhitzt. Danach wird auf 70 °C abgekühlt, mit 21 g N-Äthyl-N-(2-chloräthyl)-p-aminobenzaldehyd versetzt, in Gegenwart von 4 g Piperidin 2 Stunden bei 70 °C gehalten und anschließend nach Zugabe von 7 g Äthylendiamin 1 Stunde auf 140 °C erhitzt. Durch Zugabe von 30 ml Eisessig erhält man die Flüssigeinstellung eines Farbstoffs der Formel

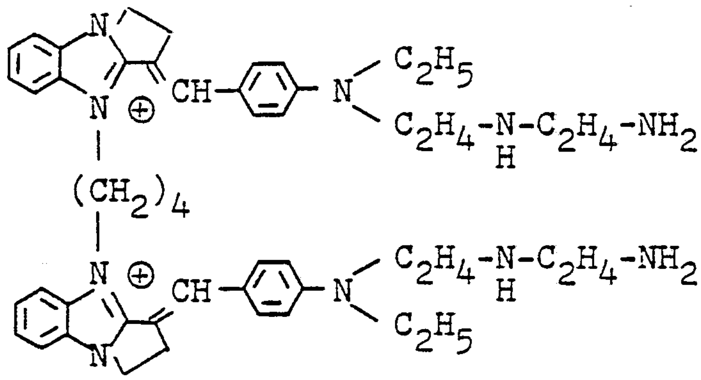

2 Cl$^{\ominus}$ ,

der Papier in grüngelben Tönen färbt.

In Analogie zu Beispiel 20 gelangt man allgemein durch Umsetzung von bifunktionellen Alkylierungsmitteln der Formel Y-$P^5$-Y mit Pyrrolidinobenzimidazolen im Molverhältnis 1 : 2 zu Verbindungen der Struktur

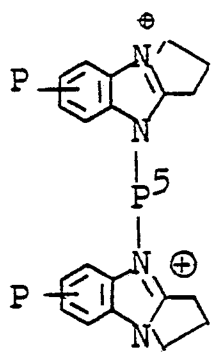

2 A$^{\ominus}$

Die Kondensation dieser Verbindungen mit Aldehyden der allgemeinen Struktur

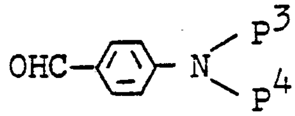

liefert Verbindungen vom Typ

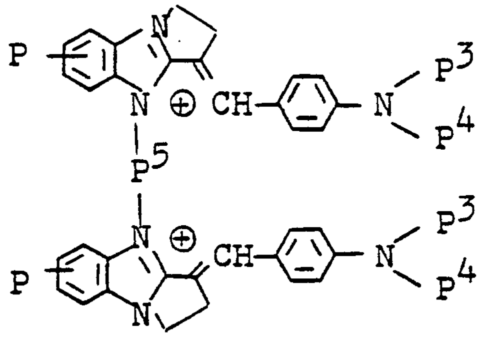

2 $A^{\ominus}$ ,

die, wenn $P^4$ eine austrittsfähige Gruppe Y - wie z. B. Chlor oder Brom - enthält, weiter mit Aminen umgesetzt werden können. In der folgenden Tabelle 2 sind weitere Farbstoffe angeführt, die nach diesem Syntheseschema erhalten wurden.

Tabelle 2

| Bsp. | P | $P^3$ | $P^4$ | $P^5$ |
|---|---|---|---|---|
| 21 | H | $-C_2H_5$ | $-C_2H_4-\underset{H}{N}-C_2H_4-NH_2$ | $-C_2H_4-$ |
| 22 | " | " | " | $-C_4H_8-$ |
| 23 | " | " | " | $-CH_2-CH{=}CH-CH_2-$ |
| 24 | " | " | " | 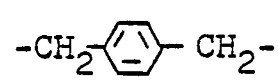 |
| 25 | $CH_3$ | " | $-C_2H_4-\underset{H}{N}-C_2H_4-N(CH_3)_2$ | " |
| 26 | " | $CH_3$ | " | 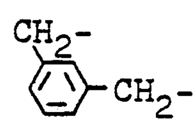 |
| 27 | " | " | $C_2H_4-\underset{H}{N}-C_6H_{12}-NH_2$ | " |

| Bsp. | P | $P^3$ | $P^4$ | $P^5$ |
|---|---|---|---|---|
| 28 | $CH_3$ | $CH_3$ | $C_2H_4-\underset{H}{N}-C_3H_6-NH_2$ | 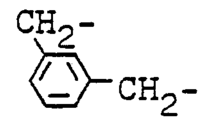 |
| 29 | H | " | $C_2H_4-\underset{H}{N}-C_3H_6-\underset{H}{N}-C_3H_6-NH_2$ | " |
| 30 | " | " | " | $C_4H_8$ |
| 31 | H | " | $CH_3$ | " |
| 32 | H | $C_2H_5$ | $C_2H_5$ | " |
| 33 | $CH_3$ | $C_2H_4Cl$ | " | " |
| 34 | " | $CH_3$ | $C_2H_4-\underset{H}{N}-C_6H_5$ | " |

Beispiel 35

16 g Pyrrolidino-[1,2-a]-benzimidazol werden in 25 ml Glykol gelöst und bei 100 °C mit 10 g Dimethylsulfat versetzt. Die Mischung wird 1 Stunde bei 100 °C nachgerührt, mit 20 g N-Methyl-N-(2-chloräthyl)-p-aminobenzaldehyd versetzt, auf 80 °C abgekühlt, mit 3 g Pyrrolidin versetzt und 3 Stunden bei 80 °C gehalten. Anschließend werden bei 80 °C 6 g N,N-Dimethyläthylendiamin zugegeben und es wird noch eine Stunde auf 140 °C erhitzt. Durch Zugabe von 25 g Eisessig erhält man die Flüssigeinstellung des Farbstoffs der Formel

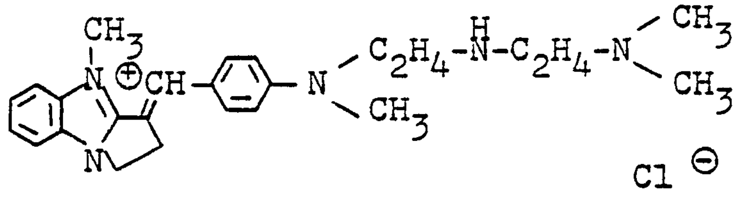,

der sich zum Färben von Papier eignet und sich durch eine geringe Abwasserbelastung auszeichnet.

In Analogie zu Beispiel 35 gelangt man durch Umsetzung von quaternierten Pyrrolidinobenzimidazolen der Formel Id mit p-Aminobenzaldehyden der Formel

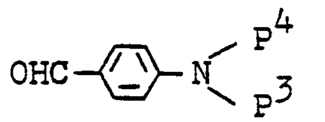,

in der $P^4$ eine austrittsfähige Gruppe Y enthält, zu Verbindungen der Formel 1j

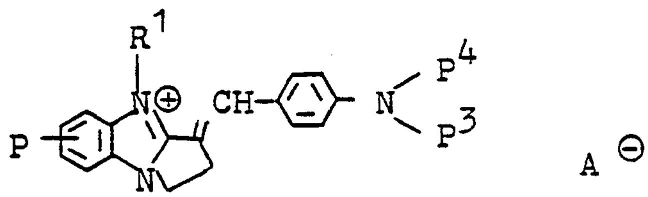 1j .

Deren Umsetzung mit äquimolaren Mengen von Aminen liefert Verbindungen der allgemeinen Form

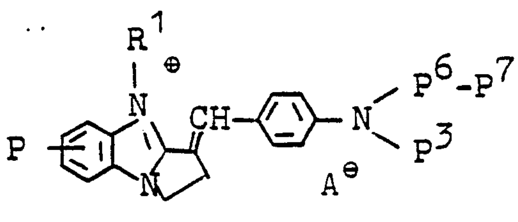

In der folgenden Tabelle 3 sind weitere Verbindungen angeführt, die analog Beispiel 35 synthetisiert wurden.

Tabelle 3

| Bsp. | $R^1$ | P | $P^3$ | $P^6$ | $P^7$ |
|---|---|---|---|---|---|
| 36 | $CH_3$ | H | $C_2H_5$ | $-C_2H_4-$ | $HN-C_2H_4-N(CH_3)_2$ |
| 37 | " | " | $CH_3$ | " | " |
| 38 | $CH_2$-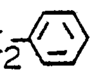 | " | " | " | " |
| 39 | " | " | $C_2H_5$ | " | " |
| 40 | " | " | " | " | $HN-C_2H_4-NH_2$ |
| 41 | $CH_3$ | " | " | " | $HN-C_3H_6-NH_2$ |
| 42 | " | " | " | " | $HN-C_6H_5$ |
| 43 | " | $CH_3$ | " | " | $HN-C_3H_6-NH-C_3H_6-NH_2$ |
| 44 | " | " | " | $-CH_2-CH(OH)-CH_2-$ | " |
| 45 | $C_2H_5$ | " | " | " | $HN-C_3H_7$ |
| 46 | " | " | " | " | $N(C_3H_7)_2$ |
| 47 | $CH_3$ | " | " | $-C_2H_4-$ | $-N(CH_3)_2$ |

| Bsp. | $R^1$ | P | $P^3$ | $P^6$ | $P^7$ |
|---|---|---|---|---|---|
| 48 | $CH_3$ | H | $C_2H_5$ | $-C_2H_4-$ | 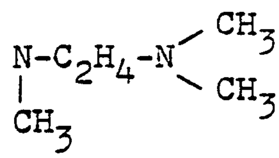 |
| 49 | " | " | " | " | 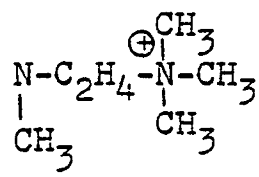 |
| 50 | " | " | " | " | $-HN-C_6H_{12}-NH_2$ |

Versetzt man das Reaktionsgemisch in Beispiel 35 nicht mit äquimolaren Mengen eines Di- oder Polyamins sondern mit 1/2 Moläquivalent, so gelangt man zu molekülverdoppelten Farbstoffen. So führt die Zugabe von 1/2 Mol Äthylendiamin in Beispiel 35 zum Farbstoff der Formel

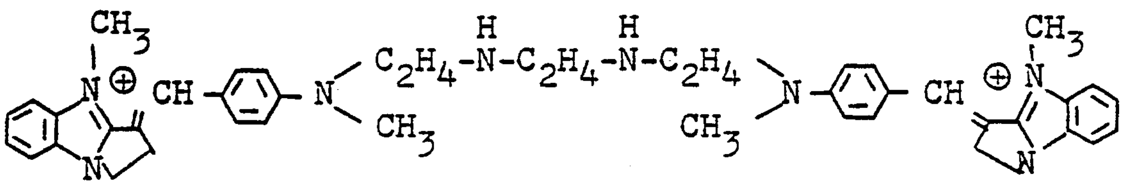

2 $Cl^{\ominus}$

In Tabelle 4 sind weitere Farbstoffe angeführt, die in Analogie zu Beispiel 35 durch Umsetzung mit 1/2 Moläquivalent eines Di- oder Polyamins erhalten wurden.

Tabelle 4

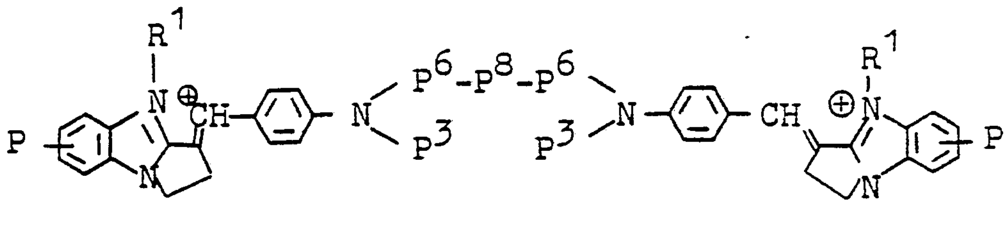

2 A$^{\ominus}$

| Bsp. | P | $R^1$ | $P^3$ | $P^6$ | $P^8$ |
|---|---|---|---|---|---|
| 51 | H | $CH_3$ | $C_2H_5$ | $C_2H_4$ | $-HN-C_2H_4-NH-$ |
| 52 | H | " | " | " | $-HN-C_3H_6-NH-$ |
| 53 | H | " | $CH_3$ | " | " |
| 54 | " | " | " | " | 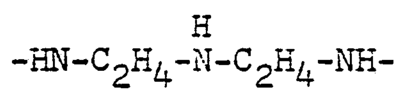 |
| 55 | $CH_3$ | " | " | " | " |
| 56 | " | " | " | " | 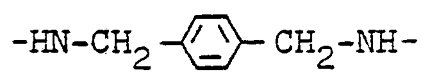 |
| 57 | " | " | $C_2H_5$ | " | " |
| 58 | H | " | " | " | 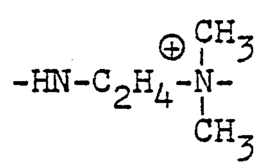 |
| 59 | " | " | " | " | $-HN-C_6H_{12}-NH-$ |
| 60 | " | " | " | " | 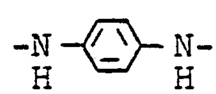 |
| 61 | " | " | " | " | 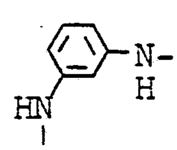 |
| 62 | " | " | " | " | $-HN-C_2H_4-O-C_2H_4-NH-$ |

Beispiel 63

Analog zu den in den Beispielen 1, 20, 35 und 51 beschriebenen Methoden gelangt man zu den entsprechenden Piperidinoverbindungen, wenn man statt der Pyrrolidino-[1,2-a]-benzimidazole die Piperidino-[1,2-a]-benzimidazole verwendet. So erhält man beispielsweise aus 17 g Piperidino-[1,2-a]-benzimidazol anstelle von 17 g 5- und 6-Methylpyrrolidino-[1,2-a]-benzimidazol in Beispiel 1 den Farbstoff der Formel

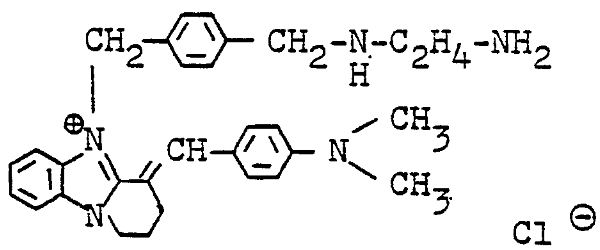

,

der sich von dem Farbstoff aus Beispiel 1 durch einen etwas röteren Farbton unterscheidet. Der Farbstoff zeigt hohe Substantivität gegenüber Holzschliff, gebleichtem und ungebleichtem Sulfit- und Sulfatzellstoff.

Patentansprüche

1. Basische Farbstoffe der allgemeinen Formel

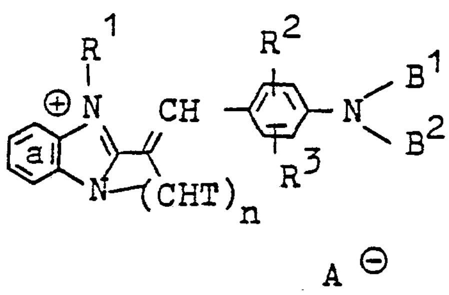

I

in der

$A^{\ominus}$ ein Anion

$R^1$ gegebenenfalls substituiertes Alkyl oder ein Rest der Formel

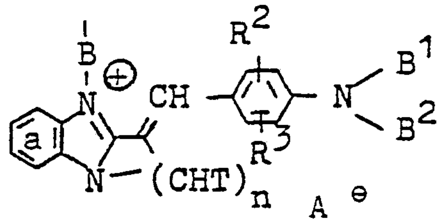

wobei B ein Brückenglied ist,

n 2, 3 oder 4,

T Wasserstoff oder $C_1$- bis $C_4$-Alkyl,

$R^2$ Wasserstoff, Methyl, Äthyl, Hydroxy, Methoxy oder Äthoxy,

$R^3$ Wasserstoff, Chlor, Methyl oder Äthyl,

$B^1$ Wasserstoff oder gegebenenfalls substituiertes Alkyl,

$B^2$ ein Rest der Formel

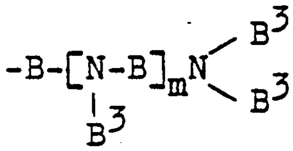 , 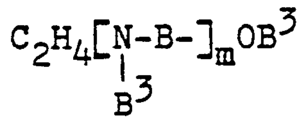 oder

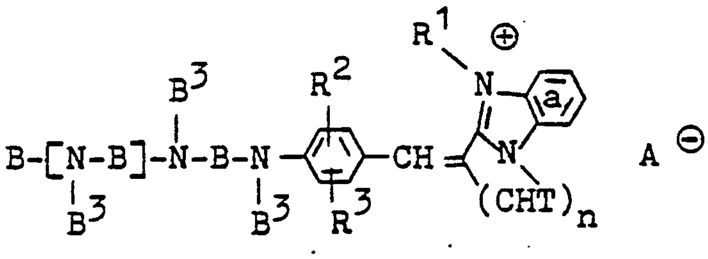 ,

m 0, 1, 2 oder 3, die Reste

$B^3$ unabhängig voneinander Wasserstoff, $C_1$- bis $C_4$-Alkyl oder durch $-\underset{B^3}{N}-B^3$, Hydroxy oder $C_1$- bis $C_4$-Alkoxy substituiertes $C_2$- oder $C_3$-Alkyl,

$N{<}^{B^3}_{B^3}$ Pyrrolidino, Piperidino, Morpholino, Piperazino, N-Methylpiperazino, N-ß-Hydroxyäthylpiperazino oder Hexamethylenimino sind und der Ring a noch substituiert sein und wobei, wenn die Verbindungen der Formel I im Rest $R^1$ einen Rest B oder $-\underset{B^3}{N}-B^3$ enthalten,

$B^2$ auch eine Gruppe $B^1$ oder

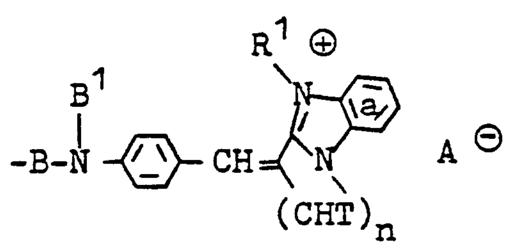

sein kann.

2. Farbstoffe gemäß Anspruch 1, wobei

n die Zahl 2

$R^1$ Methyl oder ein Rest der Struktur $-C_2H_4-Z$, $-C_4H_8-Z$, $-CH_2-CH{=}CH-CH_2-Z$,

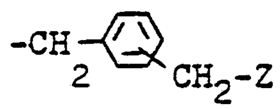, $-CH_2-CH{=}CH-CH_2-\underset{H}{N}-C_2H_4-\underset{H}{N}-CH_2-CH{=}CH-CH_2-Z$,

$-C_2H_4-\underset{H}{N}-C_2H_4-\underset{H}{N}-C_2H_4-Z$ oder $-C_4H_8-\underset{H}{N}-C_2H_4-\underset{H}{N}-C_4H_8-Z$,

T, $R^1$ und $R^3$ Wasserstoff,

$B^1$ $C_1$- bis $C_4$-Alkyl, Chloräthyl, Dimethylaminoäthyl oder Benzyl,

$B^3$ Wasserstoff, Methyl, Chloräthyl oder Dimethylaminoäthyl,

Z ein Rest der Formel

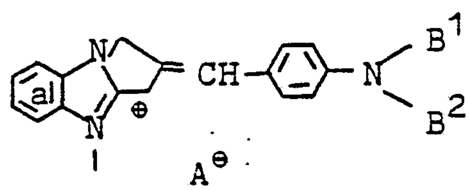

sind, $A^{\ominus}$ und $B^2$ die angegebene Bedeutung haben und der Ring a durch Methyl substituiert sein kann.

3. Verwendung der Verbindungen gemäß Anspruch 1 zum Färben von Papierstoffen.